# EUROPÄISCHE PATENTANMELDUNG

(11) **EP 1 834 730 A1**
(43) Veröffentlichungstag der Anmeldung: **19.09.2007**
(21) Anmeldenummer: 07001359.4
(22) Anmeldetag: 23.01.2007
(51) Int. Cl.: B23Q 17/22, B23Q 17/24, G01B 11/00

(54) **Werkzeugmessgerät zur Vermessung eines Werkzeugs in einem Werkzeughalter und Werkzeughalter**

(30) Priorität: 15.03.2006 DE 102006011814
(71) Anmelder: E. Zoller Gmbh & Co. KG Einstell-und Messgeräte, 71691 Freiberg/Neckar (DE)
(72) Erfinder: Pfau, Christian, 74321 Bietigheim-Bissingen (DE)
(74) Vertreter: Daub, Thomas

(57) **Zusammenfassung**

Die Erfindung geht aus von einem Werkzeugmessgerät (2) zur Vermessung eines Werkzeugs (20) in einem Werkzeughalter (24, 70), mit einem Messmittel (4) und einem Prozessmittel (8) zur Steuerung des Messmittels (4) zur Vermessung eines Messpunkts (60, 82) des Werkzeughalters (24, 70) an einer Stelle (78) relativ zu einem Gerätepunkt (64).

Um einem Fehler bei der Vermessung des Werkzeugs (20), der durch eine thermische Größenveränderung des Werkzeugs (20) oder des Werkzeughalters (24) oder einen Bedienfehler bedingt sein kann, entgegenzuwirken, wird vorgeschlagen, dass das Prozessmittel (8) zur Steuerung einer Vermessung eines Messpunkts (60, 82) des Werkzeughalters (24, 70) an einer anderen Stelle (80) und zu einer Ermittlung einer Position eines Halterpunkts (52) des Werkzeughalters (24, 70) relativ zum Gerätepunkt (64) mit Hilfe der beiden Vermessungen vorgesehen ist.

## Beschreibung

### Stand der Technik

Die Erfindung betrifft ein Werkzeugmessgerät zur Vermessung eines Werkzeugs in einem Werkzeughalter. Außerdem betrifft die Erfindung einen Werkzeughalter.

Zum exakten Bearbeiten eines Werkstücks, insbesondere mit einer mehrspindeligen Werkzeugaufnahme, ist es sinnvoll, die Bearbeitungswerkzeuge sehr exakt positioniert in Werkzeughaltern der Bearbeitungsmaschinen zu positionieren. Um das Werkzeug exakt im Werkzeughalter positionieren zu können, wird das Werkzeug zunächst in einem Werkzeughalter eines Werkzeugmessgeräts vermessen. Dazu wird die Position des Werkzeughalters relativ zu einem Messgerätenullpunkt des Werkzeugmessgeräts vermessen und dann wird das Werkzeug vermessen. Um die Position des Werkzeughalters relativ zum Messgerätenullpunkt bestimmen zu können, weist der Werkzeughalter in der Regel ein für eine Positionsmessung vorbereitetes Messelement mit einem Messpunkt auf, der durch ein geeignetes Messmittel abgetastet werden kann, so dass dessen Position bestimmt werden kann.

Die Soll-Position und die Ist-Position eines Elements eines Werkzeugs, beispielsweise einer Werkzeugschneide, werden üblicherweise in Koordinaten angegeben, deren Koordinatennullpunkt in einer Rotationsachse des Werkzeugs und etwas außerhalb des Werkzeughalters liegt. Die Position dieses theoretischen und materiell nicht sichtbaren Werkzeugnullpunkts liegt zwar relativ zum Werkzeughalter fest, sie kann jedoch zur Eichung des Werkzeugmessgeräts nicht selbst vermessen werden, da dort kein Messelement angebracht werden kann. Das Messelement wird daher an einer anderen Stelle des Werkzeughalters angeordnet und dessen Koordinaten werden von einem Eichgerät in Bezug auf den festgelegten Werkzeugnullpunkt vermessen und beispielsweise auf den Werkzeughalter geschrieben.

Bei einer späteren Vermessung des Werkzeugs im Werkzeughalter wird dann zunächst die Position des sichtbaren Messpunkts am Werkzeughalter relativ zu einem Gerätenullpunkt des vermessenden Werkzeugmessgeräts ermittelt. Dann wird die Position des theoretischen Werkzeugnullpunkts des Werkzeugs im Werkzeughalter mit Hilfe der Position des Messpunkts und der am Werkzeughalter aufgeschriebenen Positionsdaten des Messpunkts ermittelt. Und dann wird die Position eines Elements des Werkzeugs, beispielsweise einer Schneide, vermessen und in den üblichen Koordinaten mit Bezug auf den Werkzeugnullpunkt angegeben.

Bei diesem Verfahren kann es jedoch zu Ungenauigkeiten bei der Vermessung des Werkzeugs kommen. Es ist daher eine Aufgabe der Erfindung, ein Werkzeugmessgerät und einen Werkzeughalter anzugeben, mit deren Hilfe eine genaue Vermessung des Werkzeugs relativ zum Werkzeugnullpunkt durchgeführt werden kann.

### Vorteile der Erfindung

Die Erfindung geht aus von einem Werkzeugmessgerät zur Vermessung eines Werkzeugs in einem Werkzeughalter, mit einem Messmittel und einem Prozessmittel zur Steuerung des Messmittels zur Vermessung eines Messpunkts des Werkzeughalters an einer Stelle relativ zu einem Gerätepunkt.

Es wird vorgeschlagen, dass das Prozessmittel zur Steuerung einer Vermessung eines Messpunkts des Werkzeughalters an einer anderen Stelle und zu einer Ermittlung einer Position eines Halterpunkts des Werkzeughalters relativ zum Gerätepunkt mit Hilfe der beiden Vermessungen vorgesehen ist.

Die Erfindung geht hierbei von der Überlegung aus, dass die reale Position des Messpunkts relativ zum Werkzeugnullpunkt unter Umständen nicht übereinstimmt mit den Koordinaten des Messpunkts, die von dem Eichgerät ermittelt wurden und beispielsweise auf den Werkzeughalter aufgeschrieben wurden. Diese Ungenauigkeit überträgt sich auf die Vermessung des Werkzeugelements. Eine Abweichung einer momentanen Ist-Position des Messpunkts von einer Soll-Position, die durch auf dem Werkzeughalter hinterlegte Koordinaten charakterisiert ist, kann entstehen, wenn der Werkzeughalter durch thermische Kontraktion eine andere Größe oder Form aufweist als bei der ursprünglichen Vermessung des Messpunkts im Eichgerät. Eine solche thermische Kontraktion erfasst den Werkzeughalter üblicherweise symmetrisch, also beidseitig seiner Rotationsachse etwa gleich. Durch ein Vermessen eines oder mehrerer Messpunkte an mehreren Stellen, beispielsweise bezüglich der Rotationsachse gegenüberliegend, in einem Dreieck, in einem Viereck oder einer anderen Position zueinander liegend, kann eine Position der Rotationsachse unabhängig von einer Längenkontraktion des Messpunkts erfasst werden. Der üblicherweise in der Rotationsachse liegende Werkzeugnullpunkt kann mit einer befriedigenden Genauigkeit bestimmt und hierdurch das Werkzeug genau vermessen und beispielsweise im Werkzeughalter positioniert werden.

Der Werkzeugnullpunkt ist zwar ein Punkt am oder im Werkzeug, üblicherweise innerhalb des Werkzeugfutters des Werkzeugs, er kann jedoch durch die exakte Positionierung des Werkzeugs im Werkzeughalter auch als ein zum Werkzeughalter zugehöriger Halternullpunkt oder allgemeiner ein Halterpunkt betrachtet werden. Generell ist ein Halterpunkt insbesondere ein den Werkzeughalter und/oder dessen Position in irgendeiner Weise charakterisierender Punkt.

Ein Werkzeugmessgerät ist insbesondere ein Gerät zur Vermessung eines Werkzeugs. Es kann zusätzlich weitere Funktionen erfüllen, z.B. zu einer Positionseinstellung des Werkzeugs vorgesehen sein, wie beispielsweise einer Längeneinstellung eines Schneidwerkzeugs im Werkzeugfutter. Der Gerätepunkt ist insbesondere ein Koordinatennullpunkt des Messmittels; er kann im Werkzeugmessgerät fest angeordnet sein, beispielsweise durch einen Referenzpunkt einer oder mehrerer Glasmaßstäbe. Das Prozessmittel kann einen Prozessor umfassen und als Steuermittel zur Steuerung des Messmittels und als Auswertemittel, z.B. zur Ermittlung der Position des Halterpunkts, dienen. Der Messpunkt kann von einem für eine Vermessung speziell vorbereiteten Messelement festgelegt sein und ist vorzugsweise relativ zum Werkzeughalter unbeweglich. Der Messpunkt ist insbesondere räumlich beabstandet vom Halterpunkt, der zweckmäßigerweise der Werkzeugnullpunkt zur Angabe von Werkzeugkoordinaten ist. Die Ermittlung der Position des Halterpunkts kann aus Messwerten der Vermessung vorgenommen werden. Der Werkzeughalter kann ein Vorsatzhalter mit einem darin angeordneten Futter oder nur ein Vorsatzhalter sein. Das Werkzeug kann ein Schneidwerkzeug mit oder ohne daran befestigtem Werkzeugfutter sein. Der Halterpunkt kann außerhalb des Werkzeughalters zu liegen kommen, beispielsweise innerhalb des Werkzeugfutters. Die beiden Stellen sind in ihrer Position zueinander zweckmäßigerweise vorbestimmt. Sie sind zweckmäßigerweise relativ zu einer Symmetrieachse des Werkzeughalters, insbesondere der Rotationsachse des Werkzeughalters, gegenüberliegend angeordnet.

Durch die Vermessung des Messelements wird die Position des Messpunkts insbesondere relativ zum Werkzeugmessgerät bestimmt. Hierfür umfasst das Werkzeugmessgerät zweckmäßigerweise ein Bewegungsmittel zur Bewegung des Messpunkts bzw. des ihn festlegenden Messelements zwischen den beiden Vermessungen von der ersten Stelle zur zweiten Stelle. Die beiden Messungen können mit einem einzigen Messelement durchgeführt werden. Außerdem kann durch eine kreisförmige Bewegung des Messelements um die Rotationsachse des Werkzeughalters erreicht werden, dass der Messpunkt an beiden Stellen exakt gleich weit entfernt von der Rotationsachse ist und ein Punkt der Rotationsachse hierdurch sehr genau bestimmt werden kann.

Die Bewegung kann per Hand geschehen oder vorteilhafterweise durch das Prozessmittel gesteuert werden.

Besonders einfach kann der Werkzeughalter ausgeführt sein, wenn das Prozessmittel dazu vorbereitet ist, ein und dasselbe Messelement zuerst an der ersten Stelle und dann an der zweiten Stelle zu vermessen.

In einer weiteren Ausgestaltung der Erfindung können zwei oder mehr für eine Vermessung vorbereitete Messelemente des Werkzeughalters an den beiden oder noch mehr Stellen auf ihre Position vermessen werden. Die Bestimmung des Halterpunkts kann hierbei einfach erfolgen, wenn die Messpunkte bzw. die sie festlegenden Messelemente relativ zu einer Symmetrieachse des Werkzeughalters, insbesondere relativ zur Rotationsachse des Werkzeughalters, gegenüberliegend angeordnet sind.

Eine besonders ausführliche Information zur Position des Werkzeughalters und beispielsweise dessen Ausrichtung im Raum kann erhalten werden, wenn zwei oder mehr Messpunkte zunächst an jeweils einer ersten Stelle auf ihre Position hin vermessen werden, dann zumindest einer der Messpunkts an jeweils eine zweite Stelle bewegt wird und dann an dieser zweiten Position vermessen wird. Es gibt hierbei mehrere erste Positionen, die im Raum an verschiedenen Stellen angeordnet sind.

Vorteilhafterweise ist das Prozessmittel zur Verwendung der Position des Halterpunkts als Bezugspunkt für eine Werkzeugvermessung vorbereitet. Hierdurch können ein Rechenaufwand und die Anzahl von Fehlerquellen gering gehalten werden. Die Verwendung kann eine Ausgabe einer Position des Werkzeugs in Bezug auf die Position des Halterpunkts sein, wobei die Ausgabe beispielsweise auf einem Bildschirm oder als ein weiter zu bearbeitendes Signal erfolgen kann.

Die Position des Halterpunkts kann einfach bestimmt werden, wenn das Prozessmittel zur Ermittlung einer Mittelposition zwischen den Stellen vorgesehen ist. Die Stellen sind hierbei zweckmäßigerweise bezüglich der Rotationsachse des Werkzeughalters bzw. des Werkzeugs gegenüber angeordnet. Die Ermittlung der Mittelposition kann bezüglich einer einzigen Koordinatenrichtung erfolgen, wobei andere Koordinatenrichtungen unbeachtet bleiben. Die Mittelposition ist hierbei zweckmäßigerweise die Position des Halterpunkts, der somit mittig zwischen den Stellen liegt.

Eine weitere Ausführungsform der Erfindung sieht vor, dass das Prozessmittel dazu vorgesehen ist, die Position des Halterpunkts aus einer Mittelposition zwischen den Stellen und einer vorbestimmten Querstrecke quer zu einer Verbindungslinie zwischen den Stellen zu bestimmen. Der Messpunkt beziehungsweise die beiden Stellen können weitgehend unabhängig von der Position des Halterpunkts am Werkzeughalter angeordnet sein. Die Länge der Querstrecke kann im Prozessmittel hinterlegt und/oder auf dem Werkzeughalter aufgeschrieben sein.

Auch die Querstrecke kann einer thermischen Kontraktion unterworfen sein, wodurch eine Vermessung des Werkzeugs in Richtung der Querstrecke mit einer unerwünschten Ungenauigkeit behaftet sein kann. Dieser Ungenauigkeit kann entgegengewirkt werden, wenn das Prozessmittel dazu vorgesehen ist, aus einem Abstand zwischen den Stellen eine Korrektur der Position des Halterpunkts zu ermitteln. Die Korrektur kann hierbei eine Längenkorrektur einer vorbestimmten Querstrecke zwischen einer direkten Verbindungslinie zwischen den Stellen und dem Halterpunkt sein.

Es wird des Weiteren vorgeschlagen, dass das Prozessmittel dazu vorgesehen ist, aus Vermessungen der Messpunkte einen Fehlabstand zwischen dem Halterpunkt und einer momentanen Rotationsachse zu ermitteln. Hierdurch kann festgestellt werden, wenn der Werkzeughalter mit einer Ungenauigkeit in beispielsweise eine Spindel des Werkzeugeinstellgeräts eingesetzt ist und die Symmetrieachse des Werkzeughalters, die mit seiner korrekten Rotationsachse zusammenfallen kann, mit der Rotationsachse der Spindel nicht zusammenfällt. Der Fehler kann erkannt und der Werkzeughalter beispielsweise neu eingesetzt werden. Die momentane Rotationsachse kann eine Spindelachse einer Spindel des Werkzeugmessgeräts sein.

Vorteilhafterweise ist das Prozessmittel dazu vorgesehen, aus Vermessungen der Messpunkte einen Fehlwinkel zwischen einer Symmetrieachse des Werkzeughalters und einer momentanen Rotationsachse zu ermitteln. Ein falsches Einsetzen des Werkzeughalters kann erkannt und einer Fehlmessung kann entgegengewirkt werden.

Vorteilhafterweise umfasst das Werkzeugmessgerät einen Werkzeughalter, insbesondere wie nachstehend beschrieben.

Die Erfindung ist außerdem gerichtet auf einen Werkzeughalter zum Einspannen eines Werkzeugs mit einem zu einer Vermessung ausgestalteten Messelement und einer Symmetrieachse. Es wird vorgeschlagen, dass der Werkzeughalter ein weiteres zu einer Vermessung ausgestaltetes Messelement aufweist, wobei die beiden Messelemente bezüglich der Symmetrieachse gegenüberliegen. Ein in der Symmetrieachse liegender Halterpunkt kann durch eine Vermessung der beiden Messelemente einfach ermittelt und einem Fehler einer Längenkontraktion kann entgegengewirkt werden. Die Messelemente legen zweckmäßigerweise jeweils einen Messpunkt fest. Die Messelemente sind - im Gegensatz zu ihrer Umgebung - vorteilhafterweise für eine Vermessung speziell ausgestaltet.

Zweckmäßigerweise umfassen die beiden Messelemente jeweils ein Messmittel zu einer Vermessung quer zur Symmetrieachse. Auf diese Weise kann ein Abstand von durch die Messelemente festgelegten Messpunkten voneinander beziehungsweise von den Messpunkten zur Symmetrieachse einfach erfasst werden. Die Vermessung dient insbesondere der Positionsvermessung der Messelemente bzw. der Messpunkte. Weist zumindest einer der Messelemente ein Messmittel zur Vermessung längs und quer zur Symmetrieachse auf, so kann auf ein separates Messelement zur Vermessung einer Strecke längs zur Symmetrieachse verzichtet werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Der Fachmann wird die Merkmale zweckmäßigerweise auch einzeln betrachten und zu sinnvollen weiteren Kombinationen zusammenfassen.

Es zeigen:
- Fig. 1: ein Werkzeugmessgerät zur Vermessung eines Werkzeugs in einem Werkzeughalter,
- Fig. 2: den Werkzeughalter mit einem Werkzeug in einer Spindel des Werkzeugeinstellgeräts,
- Fig. 3: den Werkzeughalter in einer um 180° gedrehten Position,
- Fig. 4: einen anderen Werkzeughalter in einer schematischen Draufsicht und
- Fig. 5: einen Werkzeughalter, verkippt eingesetzt in die Spindel.

### Beschreibung der Ausführungsbeispiele

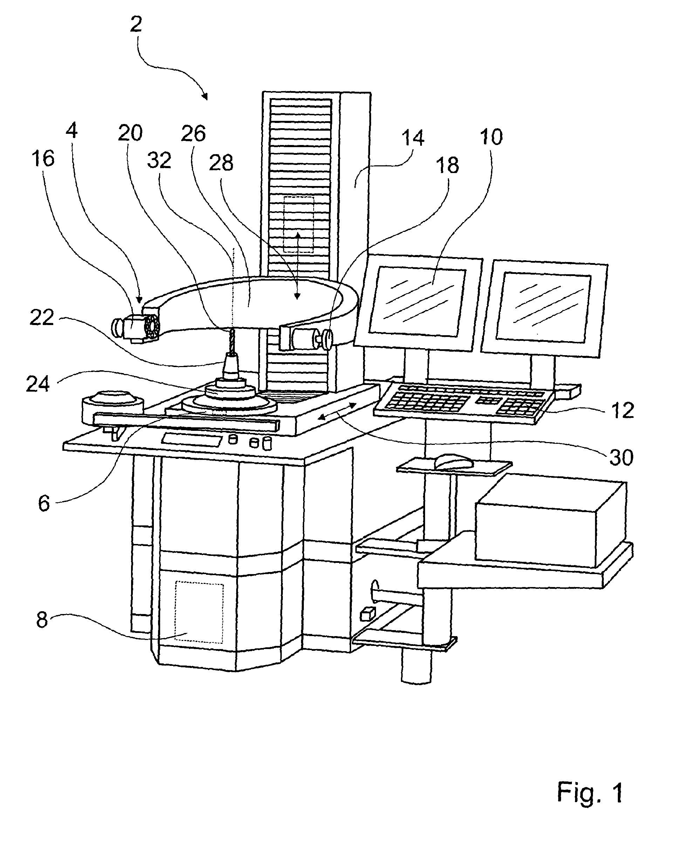

Figur 1 zeigt ein Werkzeugmessgerät 2 mit einem optischen Messmittel 4, einer Spindel 6, einem Prozessmittel 8, das mit zwei Bildschirmen 10 und einem als Tastatur ausgeführten Eingabemittel 12 verbunden ist, und einem Bewegungsmittel 14 zum Bewegen des Messmittels 4. Das Prozessmittel 8 ist als Gerät zur Datenverarbeitung mit einem Prozessor und einem Speicher ausgeführt. Das Messmittel 4 umfasst eine Kamera 16 und eine Beleuchtungseinheit 18 zur Durchlichtbeleuchtung eines Werkzeugs 20. Teil des Werkzeugs 20 ist ein Werkzeugfutter 22, das in einem Werkzeughalter 24 getragen ist, der wiederum drehbar gelagert von der Spindel 6 aufgenommen ist. Durch das Bewegungsmittel 14 ist das Messmittel 4 sowohl vertikal als auch horizontal verfahrbar, wie durch die Pfeile 28, 30 dargestellt. Mit Hilfe eines gabelförmigen Haltemittels 26 kann weiträumig um das Werkzeug 20 herumgegriffen werden, und auch große Werkzeuge sowie der Werkzeughalter 24 können sowohl vor als auch hinter einer Werkzeugachse 32 auf ihre Form oder Position relativ zu einem beispielsweise ruhenden Gerätepunkt des Werkzeugmessgeräts vermessen werden.

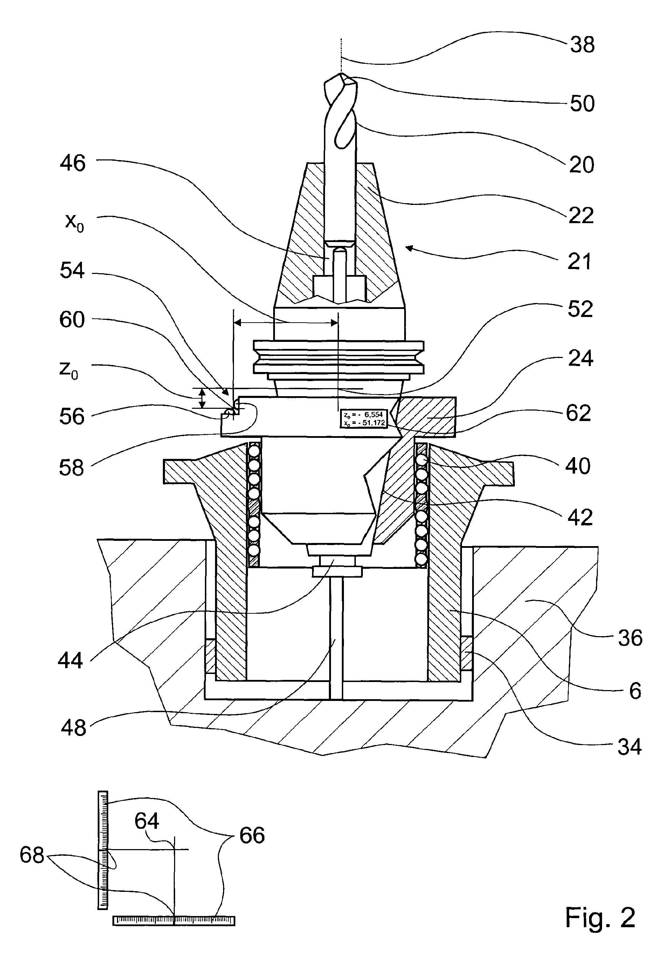

Figur 2 zeigt die Spindel 6, den Werkzeughalter 24 und das Werkzeug 20 mit einem Schneidwerkzeug 21 und seinem Werkzeugfutter 22 in einer vergrößerten und teilweise geschnittenen Darstellung. Die Spindel 6 ist mit Hilfe nur schematisch dargestellter Lager 34 in einer Basis 36 des Werkzeugmessgeräts 2 um eine Spindelachse 38 drehbar gelagert, die in Figur 2 mit der Werkzeugachse 32 zusammenfällt. Die Werkzeugachse 32 ist gleichzeitig eine Symmetrieachse des Werkzeughalters 24. Mit Hilfe einer Kugelbuchse 40 ist der als Vorsatzhalter ausgeführte Werkzeughalter 24 wiederum drehbar in der Spindel 6 gelagert. In eine kegelförmige Aufnahme 42 des Werkzeughalters 24 ist ein angepasst kegelförmig ausgeführtes Unterteil des Werkzeugfutters 22 aufgenommen, das zum Einspannen in die Spindel 6 mit einem nicht dargestellten Spannmechanismus einen Spannschaft 44 aufweist. In einer Aufnahme 46 des Werkzeugfutters 22 ist das als Bohrer ausgeführte Schneidwerkzeug 21 eingespannt, beispielsweise durch thermisches Einschrumpfen. Durch die Spindel 6, den Werkzeughalter 24 und das Werkzeugfutter 22 ist ein Positioniermittel 48 in Form einer Anschlagstange hindurchgeführt, das bis in die Aufnahme 46 hineinreicht und an das Schneidwerkzeug 21 anschlägt. Bei noch nicht in der Aufnahme 46 eingespanntem Schneidwerkzeug 21 hält das Positioniermittel 48 das Schneidwerkzeug 21 so in einer definierten Position.

Geometrische Positionsdaten des Schneidwerkzeugs 21, beispielsweise die Position einer Schneide 50, werden üblicherweise bezogen auf einen Werkzeugnullpunkt angegeben, der im Folgenden auch als Halterpunkt 52 bezeichnet wird. Dessen Position ist relativ zum kegelförmigen Unterteil des Werkzeugfutters 22 festgelegt und standardisiert. Bezüglich seiner vertikalen Position liegt der Halterpunkt 52 bzw. Werkzeugnullpunkt innerhalb des Werkzeugs 20 und etwas oberhalb des Werkzeughalters 24. Durch die an das kegelförmige Unterteil des Werkzeugfutters 22 angepasste Aufnahme 42 ist der Werkzeugnullpunkt auch ein in Bezug zum Werkzeughalter 24 festgelegter Punkt und somit ein Halterpunkt 52. Es können jedoch auch andere Punkte des Werkzeughalters 24 als Halterpunkte bezeichnet werden.

Das Prozessmittel 8 ist dazu vorbereitet, Positionsdaten des Werkzeugs 20 in Bezug auf diesen Halterpunkt 52 bzw. Werkzeugnullpunkt auszugeben. Soll die Schneide 50 vermessen und ihre Position relativ zum Werkzeugnullpunkt angegeben werden, so muss dem Prozessmittel 8 die Position des Werkzeugnullpunkts relativ zu einer definierten Gerätestelle bekannt sein. Der Werkzeugnullpunkt sollte somit durch eine Vermessung ermittelbar sein. Für diese Ermittlung umfasst der Werkzeughalter 24 ein Messelement 54 mit zwei in metallischen Mulden des Werkzeughalters 24 befestigten Kugeln 56, 58, die als Messmittel dienen und einen Messpunkt 60 des Werkzeughalters 24 definieren. Das Messelement 54 ist relativ zum übrigen Werkzeughalter 24 unbeweglich, so dass der Messpunkt 60 in einem festen Abstand zum Werkzeugnullpunkt steht. Dieser Abstand kann durch ein Eichgerät ausgemessen werden und auf einem Datenträger, beispielsweise auf einem Schild 62, am Werkzeughalter 24 notiert sein. Der Abstand setzt sich hierbei zusammen aus einem Abstand z₀ parallel zur Werkzeugachse 32 und einem Abstand x₀ quer zur Werkzeugachse 32.

Zur Vermessung des Halterpunkts 52 wird der Werkzeughalter 24 entweder manuell oder durch einen entsprechenden Antrieb der Spindel 6 so lange gedreht, bis die Richtung des Abstands x₀ quer zu einer Blickrichtung der Kamera 16, also quer zur Verbindungsachse zwischen der Kamera 16 und der Beleuchtungseinheit 18 steht. Das Messelement 54 zeigt sich nun der Kamera 16, wie in Figur 2 gezeigt. Nun wird die Oberkante der Kugel 56 vermessen, und zwar auf deren Position in z-Richtung relativ zu einem als Systemnullpunkt ausgeführten Gerätepunkt 64, der durch zwei Glasmaßstäbe 66 im Inneren des Werkzeugmessgeräts 2 durch zwei Referenzmarken 68 definiert ist. Durch optisches Abtasten der Glasmaßstäbe 66 und der Kugel 58 in z-Richtung und x-Richtung werden so der x-Wert und z-Wert der Position des Messpunkts 60 relativ zum Gerätepunkt 64 ermittelt. Durch Addition der bekannten Abstände x₀, z₀ zum x-Wert beziehungsweise z-Wert des Messpunkts 60 relativ zum Gerätenullpunkt 64 können nun die Koordinaten des Halterpunkts 52 in Bezug auf den Gerätepunkt 64 ermittelt werden. Eine Position der Schneide 50 kann hiernach in Bezug zum Halterpunkt 52 angegeben werden.

Bei dieser Vermessung sind jedoch Schwankungen der realen Abstände x₀, z₀ des Halterpunkts 52 zum Messpunkt 60, die durch thermische Ausdehnungen beziehungsweise Kontraktionen des Werkzeugfutters 22 und/oder des Werkzeughalters 24 hervorgerufen sind, noch nicht berücksichtigt. Diese sind dem Prozessmittel 8 vorerst unbekannt und führen somit zu Ungenauigkeiten bei der Angabe einer Position der Schneide 50 relativ zum Halterpunkt 52. Diese Ungenauigkeiten können erheblich vermindert werden, wenn die Position des Messpunkts 60 nach einer Vermessung an einer ersten Stelle relativ zum Gerätenullpunkt 64 an einer zweiten Stelle vermessen wird, deren Position relativ zum Gerätepunkt 64 sich von der Position der ersten Stelle unterscheidet.

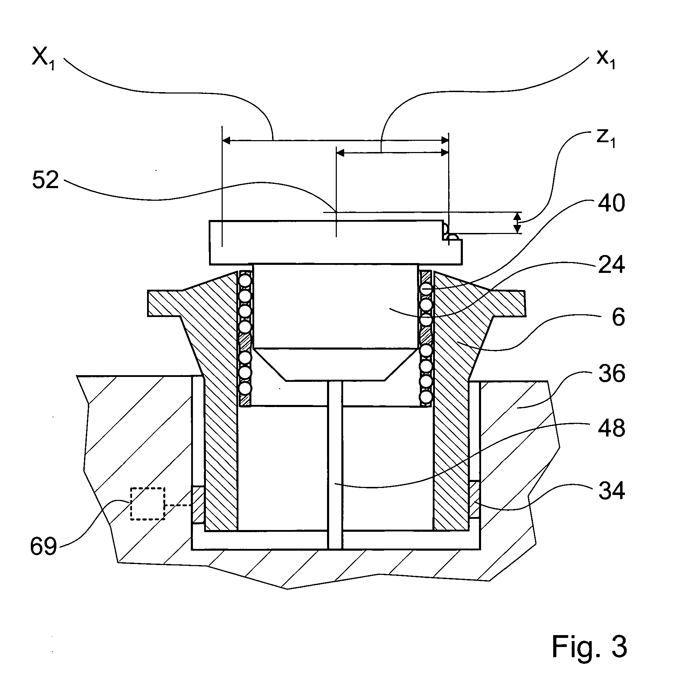

Figur 3 zeigt den Werkzeughalter 24 relativ zur Basis 36 des Werkzeugmessgeräts 2 um 180° um die Spindelachse 38 gedreht und somit den Messpunkt 60 an einer anderen Stelle, als in Figur 2 gezeigt. Die Drehung kann von einem Bediener von Hand durchgeführt werden, der die Spindel 6 außen greift und im Lager 34 dreht. Hierbei wäre das Lager 34 ein Bewegungsmittel. Zur Vereinfachung der Handhabung kann ein nur schematisch dargestellter Antrieb 69 die Spindel 6 im Lager 34 drehen und so als Bewegungsmittel dienen. Durch eine erneute Vermessung der Kugeln 56, 58 auf ihre Position relativ zum Gerätepunkt 64 kann ein Abstand X₁ zwischen den beiden Stellen des Messpunkts 60 zur ersten und zweiten Messung ermittelt werden. Durch eine Halbierung des Abstands X₁ bestimmt das Prozessmittel 8 einen Abstand x₁ zwischen der Stelle des Messpunkts 60 und einer Mittelposition zwischen den beiden Stellen. Da eine thermische Größenveränderung des Werkzeughalters 24 in der Regel gleichmäßig erfolgt, liegt diese Mittelposition in der Werkzeugachse 32 und somit in der Achse, in der der Halterpunkt 52 liegt. Auf diese Weise kann die x-Koordinate des Halterpunkts 52 sehr genau ermittelt werden. Die Abstände x₀ und x₁ können um einen kleinen Beitrag, nämlich um genau die thermische Größenveränderung, voneinander differieren. Da der Halterpunkt 52 symmetrisch innerhalb des Werkzeughalters 24 angeordnet ist, ist davon auszugehen, dass der Abstand x₁ die x-Koordinate des Halterpunkts 52 relativ zum Gerätepunkt 64 genauer definiert als der zuvor durch das Eichgerät ausgemessene Abstand x₀. Von daher kann bei einer Vermessung des Messpunkts 60 an zwei verschiedenen Stellen auf eine Eichmessung des Abstands x₀ verzichtet werden und es können die beiden Vermessungen des Messpunkts 60 an den beiden Stellen zur Bestimmung der x-Koordinate des Halterpunkts 52 herangezogen werden.

Es kann jedoch sein, dass ein Unterschied zwischen den Abständen x₀ und x₁ sich systematisch niederschlägt auf einen Unterschied zwischen dem vom Eichgerät bestimmten Abstand z₀ und einem wahren Abstand z₁ zwischen dem Halterpunkt 52 und der Oberkante der Kugel 56 in z-Richtung. Eine solche systematische Beeinflussung der Unterschiede kann beispielsweise empirisch bestimmt und im Prozessmittel 8 hinterlegt werden. Mit einer Bestimmung des Unterschieds zwischen den Abständen x₀ und x₁ kann der Unterschied somit zu einer Korrektur des Abstands z₀ in den Abstand z₁ herangezogen werden, um die Position des Halterpunkts 52 relativ zum Gerätepunkt 64 noch genauer zu bestimmen. In diesem Ausführungsbeispiel wäre der Abstand x₀ durch das Eichgerät trotz der Vermessung des Messpunkts 60 an zwei Stellen ebenfalls zu bestimmen.

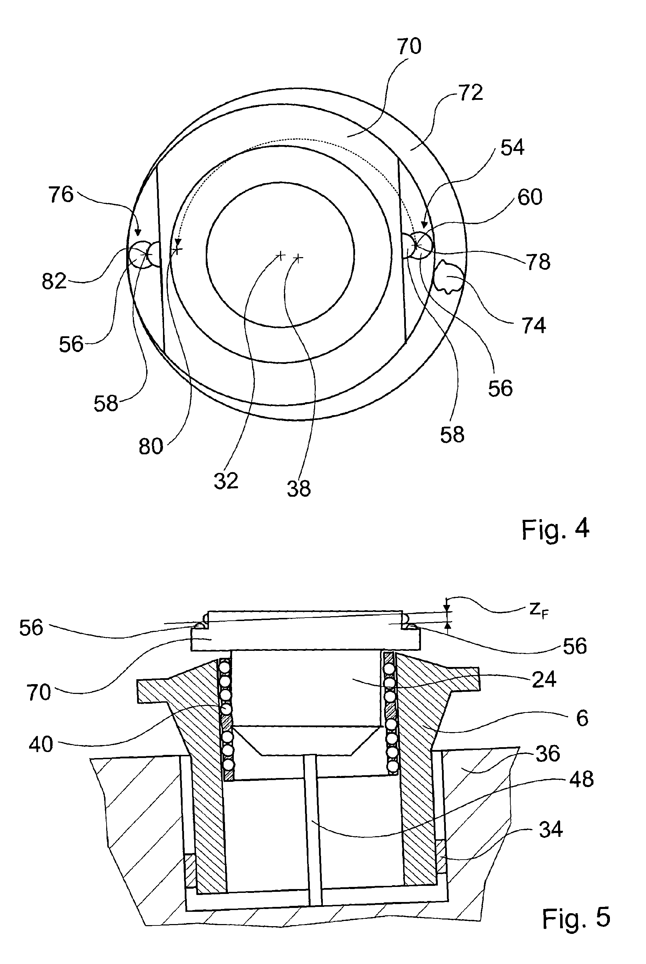

Figur 4 zeigt ein weiteres Ausführungsbeispiel mit einem in einer Draufsicht gezeigten Werkzeughalter 70, der in einer Öffnung 72 der Spindel 6 angeordnet ist. Zwischen dem Werkzeughalter 70 und einer Innenfläche der Spindel 6 sei eine der Deutlichkeit halber übertrieben groß dargestellte Verschmutzung 74 eingeklemmt, wodurch die Position der Werkzeugachse 32 von der Position der Spindelachse 38 differiert. Anstelle der Verschmutzung 74 ist auch ein Defekt in der Kugelbuchse 40 denkbar. Im Wesentlichen gleich bleibende Bauteile sind grundsätzlich mit den gleichen Bezugszeichen beziffert. Ferner kann bezüglich gleich bleibender Merkmale und Funktionen auf die Beschreibung zum Ausführungsbeispiel in den Figuren 1 bis 3 verwiesen werden. Die nachfolgende Beschreibung beschränkt sich im Wesentlichen auf die Unterschiede zum Ausführungsbeispiel in den Figuren 1 bis 3. Der Werkzeughalter 70 umfasst zwei Messelemente 54, 76 mit jeweils einer Kugel 56 zur Vermessung der z-Koordinate und einer Kugel 58 zur Vermessung der x-Koordinate. Die beiden Messelemente 54, 76 sind in Bezug auf die Werkzeugachse 32 gegenüber liegend angeordnet. Wird nun der Messpunkt 60 an einer ersten Stelle 78 vermessen und anschließend die Spindel 6 und mit ihr der Werkzeughalter 70 um 180° gedreht, so kommt der Messpunkt 60 an einer zweiten Stelle 80 zu liegen. Aus einer wie zu Figur 3 beschriebenen Berechnung des Mittelpunkts würde sich ergeben, dass der Halterpunkt 52 in der Spindelachse 38 liegt, was wegen der unterschiedlichen Lagen der Werkzeugachse 32 und der Spindelachse 38 nicht der Fall ist.

Zur Erkennung eines solchen Fehlers umfasst der Werkzeughalter 70 zwei Messelemente 54, 76, deren Abstände x₀ vom Halterpunkt 52 dem Prozessmittel 8 bekannt sind. Aus diesen bekannten Abständen x₀ kann - in Verbindung mit den Abständen z₀ der Messpunkte 60, 82 - die Lage des Halterpunkts 52 in Bezug auf den Gerätepunkt 64 ermittelt werden. Das Prozessmittel 8 erkennt einen Fehlabstand des durch die Abstände x₀ bestimmten Halterpunkts 52 und des durch die Mittelpunktsberechnung bestimmten Punkts an der Stelle 80, der in einer momentanen Rotationsachse bzw. der Spindelachse 38 liegt. Das Prozessmittel 8 kann auf einen Fehler aufmerksam machen, so dass ein Bediener den Werkzeughalter 70 erneut in die Spindel 6 einsetzen und einen neuen Messprozess starten kann.

In Figur 5 ist der Werkzeughalter 70 verkantet in die Spindel 6 eingesetzt gezeigt. Aus der Vermessung der beiden Kugeln 56 kann das Prozessmittel 8 erkennen, dass die beiden Kugeln 56 mit einem Fehlerabstand z_{F} unterschiedlich hoch in Bezug zur Spindel 6 beziehungsweise zum Gerätepunkt 64 angeordnet sind. Da dem Prozessmittel 8 die Abstände z₀ der beiden Kugeln in Bezug auf den Werkzeugnullpunkt 52 bekannt sind, ist dem Prozessmittel 8 auch deren - beispielsweise durch Fertigungsungenauigkeiten bedingter - relativer Abstand in z-Richtung bekannt. Differiert der gemessene Fehlerabstand z_{F} um mehr als einen vorgegebenen Wert von dem bekannten Relativabstand in z-Richtung, so erkennt das Prozessmittel 8 einen Fehler, der gleich einem Fehlwinkel zwischen der Werkzeugachse 32 bzw. einer Symmetrieachse des Werkzeughalters 24 und einer momentanen Rotationsachse bzw. der Spindelachse 38 ist. Das Prozessmittel 8 kann eine Warnung ausgeben, die einen Bediener zum erneuten Einsetzen des Werkzeughalters 70 in die Spindel 6 veranlasst. Einem Fehler bei der Vermessung des Werkzeugs 20 kann hierdurch effektiv entgegengewirkt werden.

### Bezugszeichen

- 2: Werkzeugmessgerät
- 4: Messmittel
- 6: Spindel
- 8: Prozessmittel
- 10: Bildschirm
- 12: Eingabemittel
- 14: Bewegungsmittel
- 16: Kamera
- 18: Beleuchtungseinheit
- 20: Werkzeug
- 21: Schneidwerkzeug
- 22: Werkzeugfutter
- 24: Werkzeughalter
- 26: Haltemittel
- 28: Pfeil
- 30: Pfeil
- 32: Werkzeugachse
- 34: Lager
- 36: Basis
- 38: Spindelachse
- 40: Kugelbuchse
- 42: Aufnahme
- 44: Spannschaft
- 46: Aufnahme
- 48: Positioniermittel
- 50: Schneide
- 52: Halterpunkt
- 54: Messelement
- 56: Kugel
- 58: Kugel
- 60: Messpunkt
- 62: Schild
- 64: Gerätepunkt
- 66: Glasmaßstab
- 68: Referenzmarke
- 69: Antrieb
- 70: Werkzeughalter
- 72: Öffnung
- 74: Verschmutzung
- 76: Messelement
- 78: Stelle
- 80: Stelle
- 82: Messpunkt
- x₀: Abstand
- x₁: Abstand
- X₁: Abstand
- z₀: Abstand
- z₁: Abstand
- z_{F}: Fehlerabstand

## Patentansprüche

1. Werkzeugmessgerät (2) zur Vermessung eines Werkzeugs (20) in einem Werkzeughalter (24, 70), mit einem Messmittel (4) und einem Prozessmittel (8) zur Steuerung des Messmittels (4) zur Vermessung eines Messpunkts (60, 82) des Werkzeughalters (24, 70) an einer Stelle (78) relativ zu einem Gerätepunkt (64),
**dadurch gekennzeichnet,**
**dass** das Prozessmittel (8) zur Steuerung einer Vermessung eines Messpunkts (60, 82) des Werkzeughalters (24, 70) an einer anderen Stelle (80) und zu einer Ermittlung einer Position eines Halterpunkts (52) des Werkzeughalters (24, 70) relativ zum Gerätepunkt (64) mit Hilfe der beiden Vermessungen vorgesehen ist.

2. Werkzeugmessgerät (2) nach Anspruch 1,
**gekennzeichnet durch**
ein Bewegungsmittel zur Bewegung des Messpunkts (60, 82) zwischen den beiden Vermessungen von der ersten Stelle (78) zur zweiten Stelle (80).

3. Werkzeugmessgerät (2) nach Anspruch 1 oder 2,
**dadurch gekennzeichnet,**
**dass** die beiden Messpunkte (60, 82) relativ zu einer Symmetrieachse des Werkzeughalters (24, 70) gegenüberliegend angeordnet sind.

4. Werkzeugmessgerät (2) nach einem der vorhergehenden Ansprüche,
**dadurch gekennzeichnet,**
**dass** das Prozessmittel (8) zur Verwendung der Position des Halterpunkts (52) als Bezugspunkt für eine Werkzeugvermessung vorbereitet ist.

5. Werkzeugmessgerät (2) nach einem der vorhergehenden Ansprüche,
**dadurch gekennzeichnet**
**dass** das Prozessmittel (8) zur Ermittlung einer Mittelposition zwischen den Stellen (78, 80) vorgesehen ist.

6. Werkzeugmessgerät (2) nach einem der vorhergehenden Ansprüche,
**dadurch gekennzeichnet**
**dass** das Prozessmittel (8) dazu vorgesehen ist, die Position des Halterpunkts (52) aus einer Mittelposition zwischen den Stellen (78, 80) und einer vorbestimmten Querstrecke quer zu einer Verbindungslinie zwischen den Stellen (78, 80) zu bestimmen.

7. Werkzeugmessgerät (2) nach einem der vorhergehenden Ansprüche,
**dadurch gekennzeichnet,**
**dass** das Prozessmittel (8) dazu vorgesehen ist, aus einem Abstand zwischen den Stellen (78, 80) eine Korrektur der Position des Halterpunkts (52) zu ermitteln.

8. Werkzeugmessgerät (2) nach einem der vorhergehenden Ansprüche,
**dadurch gekennzeichnet,**
**dass** das Prozessmittel (8) dazu vorgesehen ist, aus Vermessungen der Messpunkte (60, 82) einen Fehlabstand zwischen dem Halterpunkt (52) und einer momentanen Rotationsachse zu ermitteln.

9. Werkzeugmessgerät (2) nach einem der vorhergehenden Ansprüche,
**dadurch gekennzeichnet,**
**dass** das Prozessmittel (8) dazu vorgesehen ist, aus Vermessungen der Messpunkte (60, 82) einen Fehlwinkel zwischen einer Symmetrieachse des Werkzeughalters (24, 70) und einer momentanen Rotationsachse zu ermitteln.

10. Werkzeugmessgerät (2) nach einem der vorhergehenden Ansprüche mit einem Werkzeughalter (24, 70), insbesondere nach einem der Ansprüche 11 bis 13.

11. Werkzeughalter (24, 70) zum Einspannen eines Werkzeugs (20) mit einem zu einer Vermessung ausgestalteten Messelement (54) und einer Symmetrieachse,
**gekennzeichnet durch**
ein weiteres zu einer Vermessung ausgestaltetes Messelement (76), wobei die beiden Messelemente (54, 76) bezüglich der Symmetrieachse gegenüberliegen.

12. Werkzeughalter (24, 70) nach Anspruch 11,
**dadurch gekennzeichnet,**
**dass** beide Messelemente (54, 76) jeweils ein Messmittel zu einer Vermessung quer zur Symmetrieachse aufweisen.

13. Werkzeughalter (24, 70) nach Anspruch 11 oder 12,
**dadurch gekennzeichnet,**
**dass** zumindest eines der Messelemente (54, 76) ein Messmittel zur Vermessung längs und quer zur Symmetrieachse aufweist.
